# EUROPEAN PATENT SPECIFICATION

(11) **EP 2 381 617 B1**
(45) Date of publication and mention of the grant of the patent: **11.10.2017**
(21) Application number: 09832858.6
(22) Date of filing: 11.08.2009
(51) Int. Cl.: H04L 12/18

(54) **A METHOD FOR CALLING A CONFERENCE WHEN HARD TERMINALS HAVE BEEN BOUND TO PC CLIENTS, A LOGIN SERVER THEREOF, A CONFERENCE SERVER THEREOF AND A PC CLIENT THEREOF**
VERFAHREN ZUR HERSTELLUNG EINES KONFERENZRUFS MIT AN PC-CLIENTS ANGEBUNDENEN ENDGERÄTEN, LOGIN-SERVER DAFÜR, KONFERENZSERVER DAFÜR UND PC-CLIENT DAFÜR
PROCÉDÉ DE CONVOCATION D'UNE CONFÉRENCE LORSQUE DES TERMINAUX MATÉRIELS ONT ÉTÉ RATTACHÉS À DES CLIENTS PC, À UN SERVEUR D'OUVERTURE DE SESSION DE CEUX-CI, À UN SERVEUR DE CONFÉRENCE DE CEUX-CI ET À UN CLIENT PC DE CEUX-CI

(30) Priority: 16.12.2008 CN 200810241249
(43) Date of publication of application: 26.10.2011
(73) Proprietor: ZTE Corporation, Shenzhen, Guangdong 518057 (CN)
(72) Inventor: YANG, Jianjun, Shenzhen Guangdong 518057 (CN)
(74) Representative: Sharples, Andrew John
(86) International application number: PCT/CN2009/073178
(87) International publication number: WO 2010/069176

(56) References cited:
- EP-A1- 1 039 697
- EP-A1- 1 885 111
- WO-A1-2007/098703
- CN-A- 1 852 081
- CN-A- 1 889 676
- CN-A- 101 018 316
- US-A1- 2007 250 569
- US-A1- 2008 144 603
- US-A1- 2008 279 118
- "3rd Generation Partnership Project; Technical Specification Group Core Network and Terminals; Conferencing using the IP Multimedia (IM) Core Network (CN) subsystem; Stage 3 (Release 8)", 3GPP STANDARD; 3GPP TS 24.147, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. V8.1.0, 25 March 2008 (2008-03-25), pages 11-22, XP050364782,

## Description

### Filed of the Invention

The present invention relates to the intelligent network communication field, in particular to a method, a login server, a meeting server and a PC client for holding a meeting in a next generation network (NGN) or an IP multimedia subsystem (IMS) when the PC client is bound with a hard terminal.

### Background of the Invention

With the construction of the NGN or the IMS network, a unified communication mode based on a desktop PC client is paid more and more attention by all operators.

When bound with a soft terminal, the PC client can be used as a soft terminal after the PC client registers with a core network. Such flow of holding a meeting is detailed in individual standards.

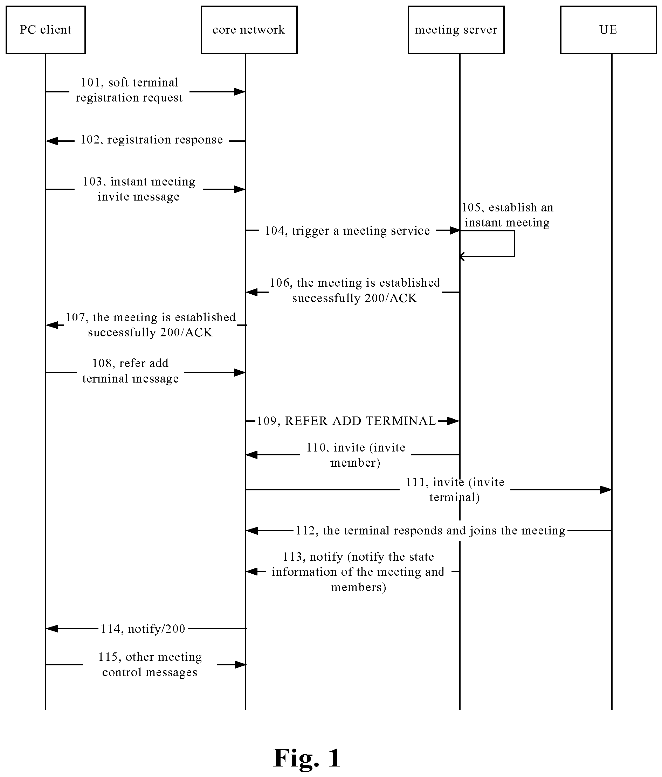

With reference to Fig.1, Fig.1 shows a flow of the method for holding an instant meeting when the PC client is bound with a soft terminal. The method concretely comprises the steps as follows.
101-102, the PC client sends a soft terminal registration request to the core network; the core network returns a registration success message after receiving the registration request, such that a signaling channel is established between the PC client and the core network.
103-107, the PC client sends an instant meeting invite message to the core network through the signaling channel; the core network, after receiving the instant meeting invite message, notifies the meeting server to establish an instant meeting; and the meeting server establishes an instant meeting, and returns a meeting establishment success message to the PC client through the core network.
108-114, the PC client sends a refer add terminal message to the core network through the signaling channel; the core network, after receiving the refer add terminal message, accesses each meeting member into the meeting through the meeting server; and the meeting server returns state information of the meeting and the meeting members to the PC client through the core network.
115, the PC client sends other meeting control information to the core network through the signaling network; and then the core network performs corresponding meeting control operations through the meeting server.

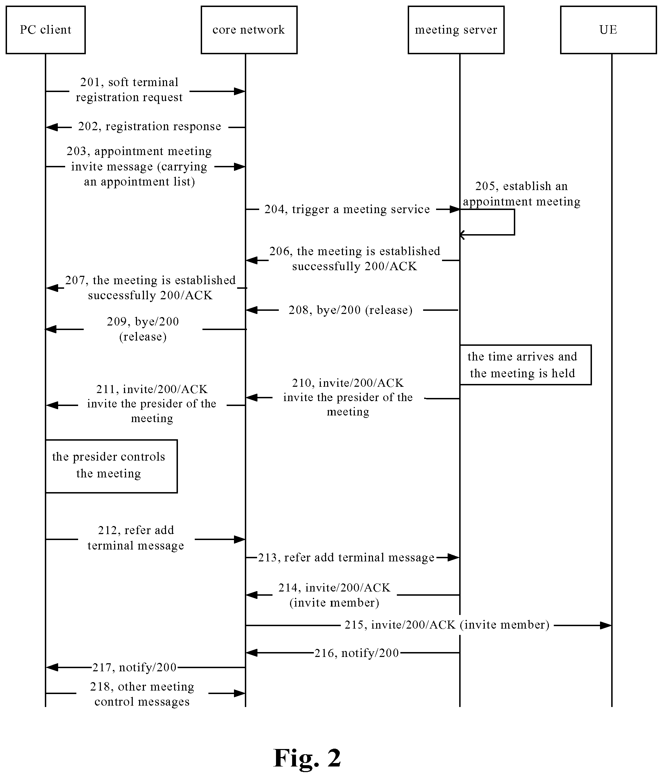

With reference to Fig.2, Fig.2 shows a flow of the method for holding an appointment meeting when the PC client is bound with a soft terminal. The method concretely comprises the steps as follows.
201-202, the PC client sends a soft terminal registration request to the core network; and the core network returns a registration success message after receiving the registration request, such that a signaling channel is established between the PC client and the core network.
203-209, the PC client sends an appointment meeting invite message (in which an appointment list is carried) to the core network through the signaling channel; the core network, after receiving the appointment meeting invite message, notifies the meeting server to establish an appointment meeting; and the meeting server, after receiving the notification, establishes the appointment meeting and returns a meeting establishment success message to the PC client through the core network.
210-217, when the time for holding the appointment meeting arrives, the meeting server sends a meeting presider invite message to the core network; the core network invites the PC client to join the meeting; the PC client then sends a refer add terminal message to the core network through the signaling channel; the core network, after receiving the refer add terminal message, accesses each meeting member into the meeting through the meeting server; and then the meeting server returns state information of the meeting and the meeting members to the PC client through the core network.
218, the PC client sends other meeting control information to the core network through the signaling network; and then the core network performs corresponding meeting control operations through the meeting server.

In above-mentioned methods, the PC client itself is a soft terminal which needs to register with the core network. A successful registration means that, the signaling channel is successfully established between the PC client and the core network and the PC client can initiate a call.

However, when the PC client is bound with a hard terminal, the PC client can not register with the core network, and as a result, the channel from the PC client to the core network is obstructed, leading to that standard SIP messages can not be sent to the core network, and moreover the meeting can not be held or controlled. At present, no relevant solution has been put forward yet to solve the problem.

EP1885111A1 discloses a conference server

### Summary of the Present Invention

The present invention aims at solving the technical problem by providing a method for holding a meeting when the PC client is bound with a hard terminal, and a system, a login server, a meeting server and a PC client for realizing the method.

According to a first aspect of the invention, there is provided a method for holding a meeting when the PC client is bound with a hard terminal as defined in appended claim 1. According to further aspects of the invention, there is provided a PC client as defined in appended claim 4 and a meeting server as defined in appended claim 5.

In order to solve the above-mentioned technical problem, the present invention puts forward the following technical solution.

A method for holding a meeting when the PC client is bound with a hard terminal comprises:
the PC client obtaining address information of a meeting server from a login server;
establishing a signaling channel between the PC client and the meeting server according to the address information; and
the PC client sending a meeting control signaling message to the meeting server through the signaling channel to control the meeting.

In the method, the signaling channel can be established in the following manner in which:
the PC client sends an instant meeting establishment request message to the meeting server according to the address information; and the meeting server establishes an instant meeting after receiving the instant meeting establishment request message

In the method, the instant meeting establishment request message is used for establishing the signaling channel between the PC client and the meeting server

In the method, the signaling channel can be established in the following manner in which:
the PC client sends an appointment meeting establishment request message to the meeting server according to the address information; and the meeting server establishes an appointment meeting after receiving the appointment meeting establishment request message; and
when time for the appointment meeting arrives, the meeting server sends to the PC client a request message for inviting the PC client to join the meeting, and establishes the signaling channel between the PC client and the meeting server

The method can also comprise: the meeting server sending state information of the meeting and/or meeting members to the PC client through the signaling channel.

In the method, during the process that the PC client controls the meeting through the meeting server, the meeting server can route the control signaling message of the PC client to each meeting member through a core network.

In the present invention, the PC client obtains the address information of the meeting server from the login server when the user logs in, and then directly establishes the signaling channel between the PC client and the meeting server according to the address information, so that the PC client can send the meeting control signaling message to the meeting server through the signaling channel to control the meeting, and the function of holding a meeting when the PC client is bound with a hard terminal can be realized.

### Brief Description of the Drawings

Fig.1 is a flowchart of the method for holding an instant meeting when the PC client is bound with a soft terminal;
Fig.2 is a flowchart of the method for holding an appointment meeting when the PC client is bound with a soft terminal;
Fig.3 is a flowchart of the method for holding an instant meeting when the PC client is bound with a hard terminal according to one embodiment of the present invention; and
Fig.4 is a flowchart of the method for holding an appointment meeting when the PC client is bound with a hard terminal according to one embodiment of the present invention.

### Preferable embodiments of the present invention

The present invention will be further detailed hereinafter in connection with the embodiments and drawings of the present invention.

In the embodiment, the system for holding and controlling the meeting when the PC client is bound with a hard terminal comprises a PC client and a hard terminal bound with the PC client, a login server, a meeting server, a core network, and the other meeting members (UE), wherein the PC client comprises an address obtaining module.

The working principle of the system is: when the user logs in the system, the PC client invokes the address obtaining module to obtain address information of the meeting server from the login server; then a signaling channel is established between the PC client and the meeting server according to the address information, meanwhile the meeting server establishes an instant meeting/appointment meeting according to the request of the PC client; afterwards, the PC client sends a meeting control signaling message to the meeting server through the signaling channel to control the instant meeting/appointment meeting, wherein the core network is only used for realizing the routing function of the signaling between the meeting server and the hard terminal bound with the PC client and the other meeting members.

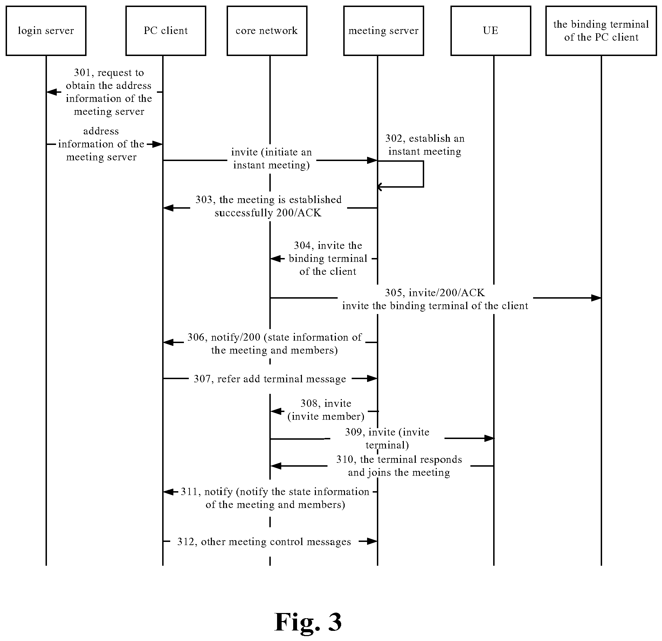

With reference to Fig.3, Fig.3 shows a flow of the method for holding an instant meeting when the PC client is bound with a hard terminal according to one embodiment of the present invention. The method concretely comprises the steps as follows.
301, the PC client obtains the address information of the meeting server from the login server, and initiates an instant meeting invite message to the meeting server wherein the media of this invite message is inactive, that is, no media is needed to be transmitted between the PC client and the meeting media server, and the invite message is sent only for establishing a signaling channel.
302, the meeting server identifies the received instant meeting invite message wherein if it is detected that the PC client bound with a hard terminal requests to hold the instant meeting, the meeting server establishes an instant meeting, and this call is not charged because the signaling channel is established for subsequent meeting control.
303, the meeting server notifies the PC client that the meeting is successfully established.
304, the meeting server inquires to obtain the number of the hard terminal bound with the PC client, and calls the number of the hard terminal to the core network.
305, the core network routes the call to the hard terminal bound with the PC client, and accesses the hard terminal into the meeting.
306, the meeting server sends a notify message to inform the PC client of the state information of the meeting and meeting members wherein when the meeting is successfully held, the client needs to subscribe the meeting information, after which the meeting server will send the state information of the meeting and meeting members to the client.
307, the PC client sends to the meeting server a refer add terminal request message which is an in-band message, and the channel is the signaling channel previously established.
308, after receiving the add terminal request, the meeting server sends to the core network an invite message for inviting the member to join the meeting.
309, the core network sends the invite message to the member terminal.
310, after the member terminal responds, the meeting server adds the member terminal into the meeting.
311, the meeting server sends a notify message to the PC client to inform the PC client of the state information of the current meeting and meeting members.
312, the PC client can continue to send other meeting control messages to the meeting server to control the meeting.

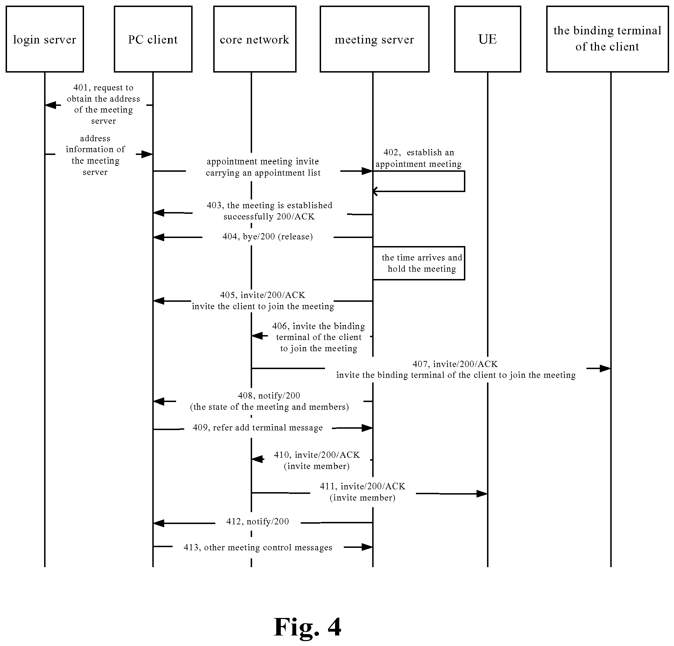

With reference to Fig.4, Fig.4 shows a flow of the method for holding an appointment meeting when the PC client is bound with a hard terminal according to one embodiment of the present invention. The method concretely comprises the steps as follows.
401, the PC client obtains the address information of the meeting server from the login server, and initiates an appointment meeting invite message to the meeting server according to the address information, wherein the invite message carries a member list.
402, the meeting server identifies the received appointment meeting invite message, wherein if it is detected that the PC client bound with a hard terminal requests to hold the appointment meeting, the meeting server establishes an appointment meeting, and this call is not charged because the signaling channel is established for subsequent meeting control.
403, the meeting server notifies the PC client that the appointment meeting is successfully established.
404, the meeting server releases the call.
405, when the time for the appointment meeting arrives, the meeting server sends to the PC client an invite message for inviting it to join the meeting so as to open up (get through) a meeting control channel to the PC client; and the PC client, after joining the meeting, can transmit a meeting control message on the signaling channel established by the invite message.
406, the meeting server inquires to obtain the number of the hard terminal bound with the client, and calls the number of the hard terminal to the core network.
407, the core network routes the call to the hard terminal bound with the PCclient, and accesses the hard terminal into the meeting.
408, the meeting server sends a notify message to inform the PC client of the state information of the meeting and meeting members wherein when the meeting is successfully held, the client needs to subscribe the meeting information after which the meeting server will send the state information of the meeting and meeting members to the client.
409, the PC client sends to the meeting server a refer add terminal request message which is the in-band message, and the channel is the signaling channel established by the invite message in step 405.
410, after receiving the add terminal request, the meeting server sends to the core network an invite message for inviting a member to join the meeting
411, the core network sends the invite message to another member terminal, and after the member terminal responds, the meeting server adds the member terminal into the meeting.
412, the meeting server sends a notify message to the PC client to inform the PC client of the state information of the current meeting and meeting members.
413, the PC client can continue to send other meeting control messages to the meeting server to control the meeting.

The embodiments above are only used to explain the technical solution of the present invention, but not used to restrict the present invention. The present invention is detailed only with reference to the preferable embodiments. What should be understood for those skilled in the art is that any amendments, equivalent substitutions to the technical solution of the present invention within the principle of the present invention are all concluded in the protection scope of the claims of the present invention.

### Industrial applicability

In the present invention, the PC client obtains the address information of the meeting server from the login server when the user logs in, and then directly establishes the signaling channel between the PC client and the meeting server according to the address information, so that the PC client can send the meeting control signaling message to the meeting server through the signaling channel to control the meeting, and the function of holding a meeting when the PC client is bound with a hard terminal can be realized.

## Claims

1. A method for holding a meeting when a PC client is bound with a hard terminal, the method comprising:
the PC client obtaining (301) address information of a meeting server from a login server;
establishing (320, 303) a signaling channel between the PC client and the meeting server according to the address information; and
the PC client sending (307, 312) a meeting control signaling message to the meeting server through the signaling channel to control the meeting
wherein the signaling channel is established in the following manner in which:
the PC client sends an instant meeting establishment request message to the meeting server according to the address information; and the meeting server establishes (302) an instant meeting after receiving the instant meeting establishment request message, wherein the instant meeting establishment request message is used for establishing the signaling channel between the PC client and the meeting server; or
the PC client sends (401) an appointment meeting establishment request message to the meeting server according to the address information; and the meeting server establishes (402) an appointment meeting after receiving the appointment meeting establishment request message; and when time for the appointment meeting arrives, the meeting server sends (405) to the PC client a request message for inviting the PC client to join the meeting, and establishes the signaling channel between the PC client and the meeting server

2. The method according to claim 1, further comprising:
the meeting server sending (408) state information of the meeting and/or meeting members to the PC client through the signaling channel.

3. The method according to claim 1, wherein during the process that the PC client controls the meeting through the meeting server, the meeting server routes the control signaling message of the PC client to each meeting member through a core network.

4. A PC client for holding a meeting when the PC client is bound with a hard terminal, wherein the PC client comprises an address obtaining module, the address obtaining module is configured to obtain address information of a meeting server from a login server, and the PC client is configured to establish a signaling channel with the meeting server according to the address information, and send a meeting control signaling message to the meeting server through the signaling channel to control the meeting;
wherein the signaling channel is established in the following manner in which:
the PC client sends an instant meeting establishment request message to the meeting server according to the address information; and the meeting server establishes an instant meeting after receiving the instant meeting establishment request message, wherein the instant meeting establishment request message is used for establishing the signaling channel between the PC client and the meeting server; or
the PC client sends an appointment meeting establishment request message to the meeting server according to the address information; and the meeting server establishes an appointment meeting after receiving the appointment meeting establishment request message; and when time for the appointment meeting arrives, the meeting server sends to the PC client a request message for inviting the PC client to join the meeting, and establishes the signaling channel between the PC client and the meeting server

5. A meeting server for holding a meeting when a PC client is bound with a hard terminal, wherein the meeting server is configured to establish an instant meeting/appointment meeting according to a request from the PC client, and control the meeting according to a meeting control signaling message from the PC client, wherein the address information of the meeting server is obtained from a login server by the PC client, a signaling channel is established between the PC Client and the meeting server according to the address information wherein the signaling channel is established in the following manner in which:
the PC client sends an instant meeting establishment request message to the meeting server according to the address information; and the meeting server establishes an instant meeting after receiving the instant meeting establishment request message, wherein the instant meeting establishment request message is used for establishing the signaling channel between the PC client and the meeting server; or the PC client sends an appointment meeting establishment request message to the meeting server according to the address information; and the meeting server establishes an appointment meeting after receiving the appointment meeting establishment request message; and when time for the appointment meeting arrives, the meeting server sends to the PC client a request message for inviting the PC client to join the meeting, and establishes the signaling channel between the PC client and the meeting server

6. The meeting server according to claim 5, wherein the meeting server is further configured to send to the PC client state information of the current meeting and/or meeting members through the signaling channel.

## Patentansprüche

1. Ein Verfahren zum Abhalten einer Besprechung, wenn ein PC-Client an ein festes Terminal gebunden ist, mit:
dem Erhalten (301) von Adressinformationen zu einem Besprechungsserver durch den PC-Client von einem Login-Server;
dem Einrichten (320, 303) eines Signalisierungskanals zwischen dem PC-Client und dem Besprechungsserver gemäß den Adressinformationen; und
dem Senden (307, 312) einer Besprechungssteuersignalisierungsnachricht von dem PC-Client an den Besprechungsserver mittels des Signalisierungskanals, um die Besprechung zu steuern,
wobei der Signalisierungskanal in der folgenden Weise aufgebaut wird, in der:
der PC-Client eine Anfragenachricht zum Einrichten einer sofortigen Besprechung an den Besprechungsserver gemäß den Adressinformationen sendet; und der Besprechungsserver nach Empfang der Anfragenachricht zum Einrichten einer sofortigen Besprechung eine sofortige Besprechung einrichtet (302), wobei die Anfragenachricht zum Einrichten einer sofortigen Besprechung zum Einrichten eines Signalisierungskanals zwischen dem PC-Client und dem Besprechungsserver genutzt wird; oder
der PC-Client sendet (401) eine Anfragenachricht zum Einrichten einer Terminbesprechung an den Besprechungsserver gemäß den Adressinformationen; und der Besprechungsserver nach Empfang der Anfragenachricht zum Einrichten einer Terminbesprechung eine Terminbesprechung einrichtet (402); und, wenn der Zeitpunkt für die Terminbesprechung erreicht ist, sendet (405) der Besprechungsserver eine Anfragenachricht an den PC-Client, um den PC-Server zum Beitreten der Besprechung einzuladen, und richtet den Signalisierungskanal zwischen dem PC-Client und dem Besprechungsserver ein.

2. Das Verfahren nach Anspruch 1 umfasst zusätzlich:
das Senden (408) von Zustandsinformation zur Besprechung und/oder zu den Besprechungsmitgliedern von dem Besprechungsserver an den PC-Client mittels des Signalisierungskanals.

3. Das Verfahren nach Anspruch 1, wobei während des Vorgangs, in dem der PC-Client die Besprechung über den Signalisierungskanal steuert, der Besprechungsserver die Steuersignalisierungsnachricht des PC-Clients durch ein Kernnetzwerk an jedes Besprechungsmitglied leitet.

4. Ein PC-Client zum Abhalten einer Besprechung, wenn der PC-Client an ein festes Terminal gebunden ist, wobei der PC-Client ein Adresserhaltungsmodul umfasst, wobei das Adresserhaltungsmodul konfiguriert ist, um Adressinformationen zu einem Besprechungsserver von einem Login-Server zu erhalten, und der PC-Client ist konfiguriert, um einen Signalisierungskanal mit einem Besprechungsserver gemäß den Adressinformationen einzurichten, und, um eine Besprechungssteuersignalisierungsnachricht mittels des Signalisierungskanals an den Besprechungsserver zu senden, um die Besprechung zu steuern;
wobei der Signalisierungskanal in der folgenden Weise aufgebaut wird, in der:
der PC-Client eine Anfragenachricht zum Einrichten einer sofortigen Besprechung an den Besprechungsserver gemäß den Adressinformationen sendet; und der Besprechungsserver nach Empfang der Anfragenachricht zum Einrichten einer sofortigen Besprechung eine sofortigen Besprechung einrichtet, wobei die Anfragenachricht zum Einrichten einer sofortigen Besprechung zum Einrichten eines Signalisierungskanals zwischen dem PC-Client und dem Besprechungsserver genutzt wird; oder
der PC-Client sendet eine Anfragenachricht zum Einrichten einer Terminbesprechung an den Besprechungsserver gemäß den Adressinformationen; und der Besprechungsserver richtet nach Empfang der Anfragenachricht zum Einrichten einer Terminbesprechung eine Terminbesprechung ein; und, wenn der Zeitpunkt für die Terminbesprechung erreicht ist, sendet der Besprechungsserver eine Anfragenachricht an den PC-Client, um den PC-Server zum Beitreten der Besprechung einzuladen, und
richtet den Signalisierungskanal zwischen dem PC-Client und dem Besprechungsserver ein.

5. Ein Besprechungsserver zum Abhalten einer Besprechung, wenn der PC-Client an ein festes Terminal gebunden ist, wobei der Besprechungsserver konfiguriert ist, um eine sofortige Besprechung/Terminbesprechung gemäß einer Anfrage von dem PC-Client einzurichten und die Besprechung gemäß einer Besprechungssteuersignalisierungsnachricht von dem PC-Client zu steuern, wobei die Adressinformationen zu dem Besprechungsserver von einem Login-Server durch den PC-Client erhalten wird, ein Signalisierungskanal zwischen dem PC-Client und dem Besprechungsserver gemäß den Adressinformationen wird eingerichtet;
wobei der Signalisierungskanal in der folgenden Weise aufgebaut wird, in der:
der PC-Client eine Anfragenachricht zum Einrichten einer sofortigen Besprechung an den Besprechungsserver gemäß den Adressinformationen sendet; und der Besprechungsserver nach Empfang der Anfragenachricht zum Einrichten einer sofortigen Besprechung eine sofortige Besprechung einrichtet, wobei die Anfragenachricht zum Einrichten einer sofortigen Besprechung zum Einrichten eines Signalisierungskanals zwischen dem PC-Client und dem Besprechungsserver genutzt wird; oder der PC-Client sendet eine Anfragenachricht zum Einrichten einer Terminbesprechung gemäß den Adressinformationen an den Besprechungsserver; und der Besprechungsserver richtet nach Empfang der Anfragenachricht zum Einrichten einer Terminbesprechung eine Terminbesprechung ein; und, wenn der Zeitpunkt für die Terminbesprechung erreicht ist, sendet der Besprechungsserver eine Anfragenachricht an den PC-Client, um den PC-Server zum Beitreten der Besprechung einzuladen, und richtet den Signalisierungskanal zwischen dem PC-Client und dem Besprechungsserver ein.

6. Der Besprechungsserver nach Anspruch 5, wobei der Besprechungsserver zusätzlich konfiguriert ist, um Zustandsinformationen zur aktuellen Besprechung und/oder zu den Besprechungsmitgliedern mittels des Signalisierungskanals an den PC-Client zu senden.

## Revendications

1. Procédé pour tenir une réunion lorsqu'un client PC est lié avec un terminal lourd, le procédé comprenant :
le client PC obtenant (301) des informations d'adresse d'un serveur de réunion à partir d'un serveur de connexion ;
l'établissement (320, 303) d'un canal de signalisation entre le client PC et le serveur de réunion selon les informations d'adresse ; et
le client PC envoyant (307, 312) un message de signalisation de contrôle de réunion au serveur de réunion par l'intermédiaire du canal de signalisation pour contrôler la réunion
dans lequel le canal de signalisation est établi de la manière suivante par laquelle :
le client PC envoie un message de demande d'établissement de réunion instantanée au serveur de réunion selon les informations d'adresse ; et le serveur de réunion établit (302) une réunion instantanée après la réception du message de demande d'établissement de réunion instantanée, où le message de demande d'établissement de réunion instantanée est utilisé pour établir le canal de signalisation entre le client PC et le serveur de réunion ; ou
le client PC envoie (401) un message de demande d'établissement de réunion de rendez-vous au serveur de réunion selon les informations d'adresse ; et le serveur de réunion établit (402) une réunion de rendez-vous après la réception du message de demande d'établissement de réunion de rendez-vous ; et lorsque l'heure de la réunion de rendez-vous arrive, le serveur de réunion envoie (405) au client PC un message de demande pour inviter le client PC à rejoindre la réunion, et établit le canal de signalisation entre le client PC et le serveur de réunion.

2. Procédé selon la revendication 1, comprenant en outre :
le serveur de réunion envoyant (408) des informations d'état de la réunion et/ou des membres de la réunion de réunion au client PC par l'intermédiaire du canal de signalisation.

3. Procédé selon la revendication 1, dans lequel, pendant le processus au cours duquel le client PC contrôle la réunion par l'intermédiaire du serveur de réunion, le serveur de réunion route le message de signalisation de contrôle du client PC vers chaque membre de la réunion par l'intermédiaire d'un réseau coeur.

4. Client PC pour tenir une réunion lorsque le client PC est lié avec un terminal lourd, dans lequel le client PC comprend un module d'obtention d'adresse, le module d'obtention d'adresse est configuré pour obtenir des informations d'adresse d'un serveur de réunion à partir d'un serveur de connexion, et le client PC est configuré pour établir un canal de signalisation avec le serveur de réunion selon les informations d'adresse, et envoyer un message de signalisation de contrôle de réunion au serveur de réunion par l'intermédiaire du canal de signalisation pour contrôler la réunion ;
dans lequel le canal de signalisation est établi de la manière suivante par laquelle :
le client PC envoie un message de demande d'établissement de réunion instantanée au serveur de réunion selon les informations d'adresse ; et le serveur de réunion établit une réunion instantanée après la réception du message de demande d'établissement de réunion instantanée, où le message de demande d'établissement de réunion instantanée est utilisé pour établir le canal de signalisation entre le client PC et le serveur de réunion ; ou
le client PC envoie un message de demande d'établissement de réunion de rendez-vous au serveur de réunion selon les informations d'adresse ; et le serveur de réunion établit une réunion de rendez-vous après la réception du message de demande d'établissement de réunion de rendez-vous ; et lorsque l'heure de la réunion de rendez-vous arrive, le serveur de réunion envoie au client PC un message de demande pour inviter le client PC à rejoindre la réunion, et établit le canal de signalisation entre le client PC et le serveur de réunion.

5. Serveur de réunion pour tenir une réunion lorsqu'un client PC est lié avec un terminal lourd, dans lequel le serveur de réunion est configuré pour établir une réunion instantanée/réunion de rendez-vous selon une demande en provenance du client PC, et contrôler la réunion selon un message de signalisation de contrôle de réunion en provenance du client PC, dans lequel les informations d'adresse du serveur de réunion sont obtenues à partir d'un serveur de connexion par le client PC, un canal de signalisation est établi entre le Client PC et le serveur de réunion selon les informations d'adresse
dans lequel le canal de signalisation est établi de la manière suivante par laquelle :
le client PC envoie un message de demande d'établissement de réunion instantanée au serveur de réunion selon les informations d'adresse ; et le serveur de réunion établit une réunion instantanée après la réception du message de demande d'établissement de réunion instantanée, où le message de demande d'établissement de réunion instantanée est utilisé pour établir le canal de signalisation entre le client PC et le serveur de réunion ; ou le client PC envoie un message de demande d'établissement de réunion de rendez-vous au serveur de réunion selon les informations d'adresse ; et le serveur de réunion établit une réunion de rendez-vous après la réception du message de demande d'établissement de réunion de rendez-vous ; et lorsque l'heure de la réunion de rendez-vous arrive, le serveur de réunion envoie au client PC un message de demande pour inviter le client PC à rejoindre la réunion, et établit le canal de signalisation entre le client PC et le serveur de réunion.

6. Serveur de réunion selon la revendication 5, dans lequel le serveur de réunion est en outre configuré pour envoyer au client PC des informations d'état de la réunion en cours et/ou des membres de la réunion par l'intermédiaire du canal de signalisation.
